# EUROPEAN PATENT SPECIFICATION

(11) **EP 2 359 496 B1**
(45) Date of publication and mention of the grant of the patent: **28.11.2012**
(21) Application number: 09788064.5
(22) Date of filing: 04.09.2009
(51) Int. Cl.: H04B 7/155

(54) **COMMUNICATION SYSTEM, COMMUNICATION METHOD, RELAY STATION, AND COMPUTER PROGRAM**
KOMMUNIKATIONSSYSTEM, KOMMUNIKATIONSVERFAHREN, RELAISSTATION UND COMPUTERPROGRAMM
SYSTÈME DE COMMUNICATION, PROCÉDÉ DE COMMUNICATION, STATION RELAIS ET PROGRAMME D'ORDINATEUR

(30) Priority: 10.10.2008 JP 2008264630
(43) Date of publication of application: 24.08.2011
(73) Proprietor: Canon Kabushiki Kaisha, Tokyo 146-8501 (JP)
(72) Inventor: INOHIZA, Hirohiko, Tokyo 146-8501 (JP)
(74) Representative: Garner, Jonathan Charles Stapleton
(86) International application number: PCT/JP2009/065881
(87) International publication number: WO 2010/041535

(56) References cited:
- EP-A- 1 808 981
- EP-A- 1 926 233
- WO-A-2008/024158
- US-A1- 2007 104 199

## Description

### TECHNICAL FIELD

The present invention relates to communication technology for relaying and transmitting received data between a plurality of communication stations.

### BACKGROUND ART

Conditions of transmission channels tend to change in a conventional wireless communication system such as a mobile communication system. Accordingly, a transmitter transmits the same data a plurality of times while a receiver performs maximum likelihood decoding on a plurality of received data sets in order to secure reception quality of transmission data, in an effort to increase error resistance in a wireless communication. Japanese Patent Laid-Open No. 62-048827 discloses a method in which a receiver has a function for detecting the reception electric field intensity and notifying a transmitter of the detected intensity while the transmitter controls the number of times transmission data is repeatedly transmitted in accordance with the reception electric field intensity at the receiver. Moreover, Japanese Patent Laid-Open No. 08-139708 discloses a method in which transmission data is repeatedly transmitted at different times using the idle channels of the communication slots in a TDMA-TDD wireless communication system.

On the other hand, it is expected that wireless communication will also be used for communications between information devices at home in the future. A time division relay transmission system in which information devices relay and transmit transmission data to each other using time division or using a plurality of transmission channels is conceivable as a method for realizing high-quality wireless communication with ease between information devices at home. Such wireless communication at home mainly includes communication of data streams that require a real-time performance such as video data and audio data. Particularly, with a home theater system in which a multichannel speaker is used or a multi-camera system in which many network cameras are used, it is required to secure reception quality at terminals on the network, even when the conditions of the transmission channels change. Thus, also with a time division relay transmission system, the necessity for avoiding data retransmission due to occurrence of an error and the like, and transmitting data with a small amount of delay or with a stable delay has been increasing.

Further, as is clear from Japanese Patent Laid-Open No. 62-048827 and Japanese Patent Laid-Open No. 08-139708, with the conventional wireless communication, a transmitter and a receiver retransmit data one-on-one, and other terminals that receive data are not involved in retransmission. Particularly, when an error occurs, data is repeatedly retransmitted; thus, resources are consumed in vain.
EP 1 808 981 discloses, for use in a wireless computer network having a radio relay capable of transmitting messages, a system and method, operable with the radio relay, for selectively repeating a unicast message received from a source end-station only upon some indication that a destination end-station has not received the message. The system includes: (1) a transceiver that receives the unicast message from the source end-station and (2) control circuitry, coupled to the transceiver, that determines whether the destination end-station has received the unicast message and causes the transceiver to refrain from repeating the unicast message if the destination end-station has received the unicast message, the radio relay thereby freed from repeating already-received unicast messages.
WO 2008/024158 discloses a method for transmitting data from a source to a destination. The method includes: transmitting the data from the source to both the destination and a relay station within a first transmission; decoding the data in the first transmitting at both the relay station and the destination wherein the destination acknowledges success of the decoding by generating a ACK message or lack of success by generating either a NACK message or by failing to generate the ACK signal; retransmitting from the source information related to the first transmission in response to either the NACK message or the failure of the destination to generate the ACK message; and wherein when the relay station decodes the data sent by the source within the first transmission correctly, the relay station transmits a second transmission; or, on the other hand, if the relay station is unable to decode the data correctly from the first transmission sent by the source, the relay station remains silent. The destination may be another relay station.
US 2007/104199 discloses a method, apparatus and system for communicating in a wireless mesh network that may entail receiving a multi-receiver single body broadcast (MRSSB) medium access control (MAC) frame at a mesh node. The MAC frame may include a multiple receiver address field, a previously addressed neighbor field and a message sequence number field, which may be used by the receiving node to know whether it has already received this frame and if not, generate a forwarding frame to forward the data of the received frame but addressed to neighboring nodes except for those which are likely to have previously received the message already.

### DISCLOSURE OF INVENTION

In view of this, the present invention provides communication technology for avoiding wasteful consumption of total resources, and for improving throughput.

In a first aspect of the present invention there is provided a communication system as specified in claim 1. In a second aspect of the present invention there is provided a relay station as specified in claims 2 to 8. In a third aspect of the present invention there is provided a communication method as specified in claim 9. In a fourth aspect of the present invention there is provided a computer program as specified in claim 10. In a fifth aspect of the present invention there is provided a computer-readable storage medium as specified in claim 11.

Further features of the present invention will become apparent from the following description of exemplary embodiments with reference to the attached drawings.

### BRIEF DESCRIPTION OF DRAWINGS

FIG. 1 is a diagram showing an example of an arrangement of a control station and terminal stations.

FIG. 2 is a block diagram showing an example of the internal configuration of the terminal station.

FIG. 3 is a block diagram showing an example of the internal configuration of the control station.

FIG. 4 is a diagram showing an example of a format configuration of a super frame.

FIG. 5 is a diagram showing an example of a format configuration of a MAC frame.

FIG. 6 is a diagram showing an example of a packet configuration of a MAC frame.

FIG. 7 is a diagram showing another example of a packet configuration of a MAC frame.

FIG. 8 is a diagram showing an example of a transmission ACK/CQI channel format in a time division relay transmission system.

FIG. 9 is a diagram showing an example of a transmission ACK/CQI channel format in a frequency division relay transmission system.

FIG. 10A is a sequence diagram showing data transmission between the control station and the terminal stations using a MAC frame 1 in the time division relay transmission system.

FIG. 10B is a sequence diagram showing data transmission between the control station and the terminal stations using a MAC frame 2 in the time division relay transmission system.

FIG. 10C is a sequence diagram showing data transmission between the control station and the terminal stations using a MAC frame 1 in the frequency division relay transmission system.

FIG. 11 is a diagram showing a CQI/ACK table used for scheduling data for the terminal stations.

FIG. 12 is a diagram showing a table indicating rules for determining allocation priorities of data for the terminal stations.

FIG. 13A is a diagram showing a basic flowchart of processing for scheduling data for the terminal stations performed by a relay terminal station.

FIG. 13B-1 and FIG. 13B-2 are detailed flowcharts of processing for scheduling data for the terminal stations performed by the relay terminal station.

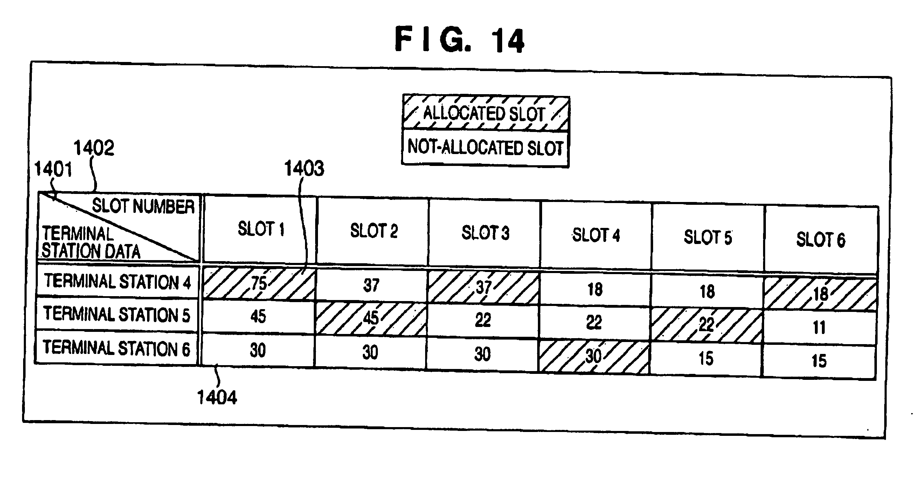

FIG. 14 is a diagram showing an example of a result obtained by allocating slots based on priorities..

### BEST MODE FOR CARRYING OUT THE INVENTION

Embodiments of the present invention will be described below. The individual embodiments to be described will be useful in understanding various concepts of the present invention such as superordinate concepts, intermediate concepts, and subordinate concepts. Moreover, it should be understood that the technical scope of the present invention is defined by the appended claims and not limited by the individual embodiments below.

### First Embodiment

In conventional methods, a wireless communication system controlled redundancy of transmission data merely according to electric field intensity at a receiver. Thus, the system did not have a unit for determining how much redundancy should be provided to which channel when transmission is performed in the case that the system has a plurality of transmission channels. When data redundancy for each transmission channel is simply determined based on electric field intensity (the reception level), a terminal station that has a transmission channel with low electric field intensity needs to increase the redundancy of the data. Consequently, the data for the terminal station that has a transmission channel with low electric field intensity occupies bandwidth; thus, channel quality (reception quality) at other terminal stations may not be secured.

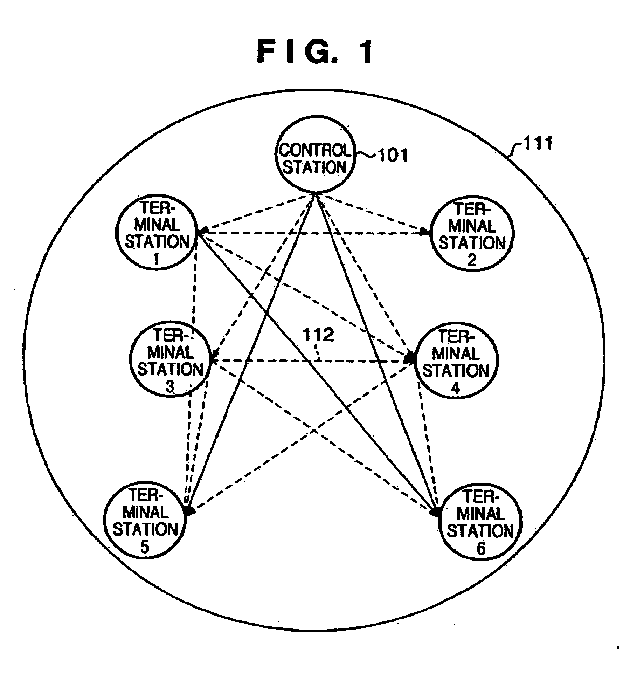

In order not to decrease resources in this manner, a communication system of the present invention is constituted by a plurality of communication stations including a control station and terminal stations as shown in FIG. 1. In FIG. 1, a control station 101 generates source data addressed to terminal stations, and broadcasts and transmits this source data to terminal stations 1 to 6. The terminal stations 1 to 6 receive source data, which is data to be relayed, and relay and transmit the source data when selected as relay terminal stations.

A wireless communication range of the control station 101 is a region 111. Note that the control station 101 constitutes a mesh-like network together with the terminal stations 1 to 6. Here, a wireless transmission channel 112 is one of the wireless transmission channels generated by the relay terminal stations, and represents a wireless transmission channel between the terminal stations 3 and 4.

The control station 101 generates source data including information indicating a relay order of terminal stations (relay order information) that relay data received from the control station 101 and addressed to other terminal stations, and broadcasts the source data. The terminal stations 1 to 6 receive the source data, and retransmit the source data as relay stations to other terminal stations that could not properly receive the source data in accordance with the order designated by the relay order information.

A series of terminal stations designated by relay order information sequentially retransmits source data in a similar fashion; thereby, all the terminal stations properly receive a data signal at the end. In this way, when the terminal stations serve as relay stations, the stations relay (retransmit) data received from the control station 101 and addressed to other terminal stations.

Information transmitted on wireless transmission channels includes AV (Audio Visual) data and control data. In this embodiment, AV data is taken as an example of information that is redundantly transmitted using a plurality of wireless transmission channels.

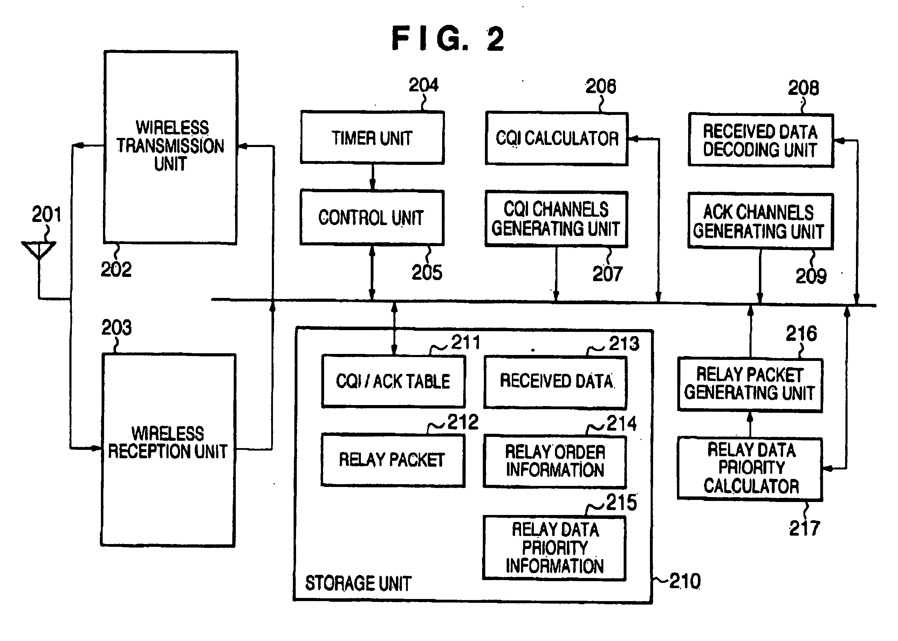

FIG. 2 is a block diagram showing the internal configuration of the terminal stations 1 to 6. Note that, as described above, the terminal stations 1 to 6 operate as relay terminal stations that receive source data and also perform a relay operation in some cases, and the stations operate as non-relay terminal stations that only receive source data in other cases. Relay order information determines in which state the stations operate.

In FIG. 2, an antenna 201 receives source data including a relay order transmitted from the control station 101. A wireless reception unit 203 demodulates the signals received by the antenna 201. The wireless reception unit 203 is an example of a unit that receives relay order information included in source data transmitted from the control station.

A control unit 205 includes a microprocessor; and controls all the operations of a signal processing circuit, inside the terminal station. A timer unit 204 is a unit for generating timing signals for transmission/reception processing. The control unit 205 manages various data processes on the basis of timing signals generated by the timer unit.

A received data decoding unit 208 is a circuit that converts source data received by the antenna 201 into the original data. Decoded data is stored in a storage unit 210.

Among data that have been decoded, relay order information 214 is stored in the storage unit 210.

A CQI (Channel Quality Indicator) calculator 206 analyzes channel quality indicators (CQIs) of other terminal stations at the terminal station using the received source data. Channel quality includes bit error rate, frame error rate, signal intensity, signal to interference ratio, signal to noise ratio, and the like; however, these are mere examples.

A CQI channels generating unit 207 generates CQI channel signals for broadcasting and transmitting a CQI analyzed by the CQI calculator 206 to other terminal stations. An ACK channels generating unit 209 checks a result of decoding by the received data decoding unit 208. Further, the ACK channels generating unit 209 generates ACK channel signals in order to broadcast and transmit ACK (retransmission unnecessary) or NAK (retransmission requested), which is a reception response, to the control station 101 and other terminal stations.

A wireless transmission unit 202 modulates the reception response and a channel quality indicator (CQI) that has been analyzed, and broadcasts and transmits them. The reception response and channel quality indicator (CQI) that are broadcast and transmitted are received by the control station 101 and other terminal stations, and decoded through the antenna 201, the wireless reception unit 203, and the received data decoding unit 208, similar to the processing of data signals described above. The reception response and channel quality indicator (CQI) that have been decoded are stored in a CQI/ACK table 211 of the storage unit 210. The CQI/ACK table is a table showing reception responses and channel quality on transmission channels of the terminal stations 1 to 6. A relaying terminal station reads the relay order information 214, and operates as a relay terminal station as in the following.

Using the CQI/ACK table 211 stored in the storage unit 210, a relay data priority calculator 217 sets to which of the terminal stations that have not properly received source data yet the terminal station source data is redundantly transmitted with priority. Then, this setting is stored in the storage unit 210 as relay data priority information 215 including the priorities of data addressed to the terminal stations. A relay packet generating unit 216 constructs a relay packet 212 for retransmitting source data to a terminal station that could not properly receive the source data. A relay packet is a frame for redundantly retransmitting source data to the terminal stations based on priorities set in the relay data priority information 215 stored in the storage unit 210. A relay packet will be described in detail later.

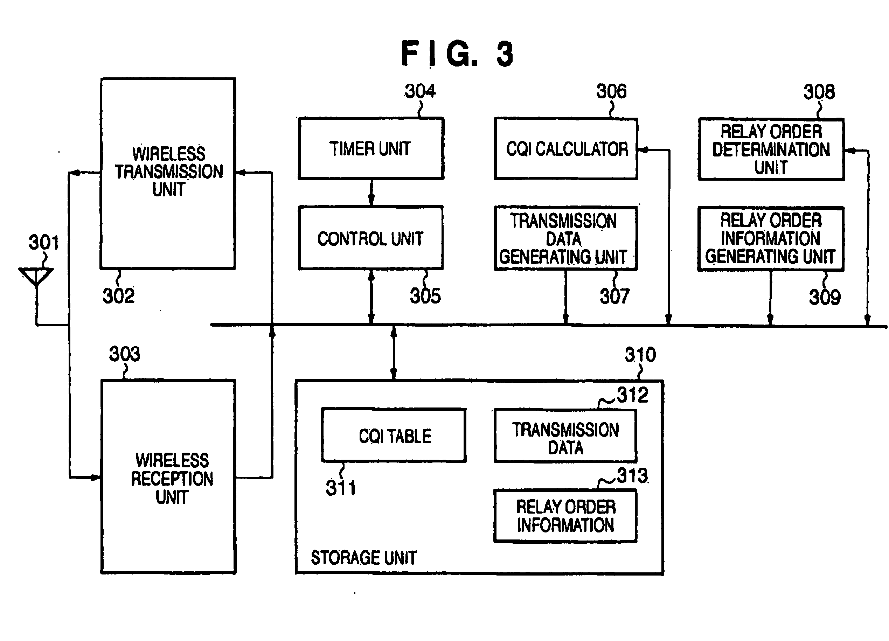

FIG. 3 is a block diagram showing the internal configuration of the control station 101. First, an antenna 301 wirelessly transmits/receives data signals between the control station 101 and the terminal stations 1 to 6. A wireless reception unit 303 demodulates the received signals.

A control unit 305 includes a microprocessor, and controls all the operations of a signal processing circuit, inside the control station. A timer unit 304 is a unit for generating timing signals for transmission/reception processing. The control unit 305 manages various data processes on the basis of timing signals generated by the timer unit.

Before transmitting source data to the terminal stations 1 to 6, the control station 101 performs a training sequence for measuring channel quality between the control station 101 and the terminal stations 1 to 6 as well as channel quality among the terminal stations 1 to 6. Through this training sequence, an optimal relay terminal station and the relay order can be determined as follows.

In the training sequence, the terminal stations 1 to 6 measure channel quality regarding all the transmission channels to other terminal stations, and summarize the measurement result into data, and report the data to the control station 101. Thereafter, a CQI calculator 306 of the control station 101 analyzes channel quality between the control station 101 and the terminal stations 1 to 6, and channel quality indicators (CQIs) among the terminal stations 1 to 6 using data obtained through the training sequence. Then, the analysis result is stored as a CQI table 311 in a storage unit 310. The CQI table 311 shows channel quality of transmission channels among the terminal stations.

A relay order determination unit 308 reads out data in the CQI table 311 stored in the storage unit 310, selects a relay station that is evaluated as an optimal station because of its high channel quality indicator from the terminal stations 1 to 6, and determines the relay order of relay terminal stations.

A relay order information generating unit 309 generates relay order data using the result obtained by the relay order determination unit 308 as control information.

A transmission data generating unit 307 generates transmission data 312 that includes relay order data and is source data for broadcasting and transmitting to the terminal stations, and the storage unit 310 stores the transmission data 312. Then, a wireless transmission unit 302 of the control station 101 reads out transmission data stored in the storage unit 310, and modulates the transmission data. The control unit 305 manages timing for transmission using the timer unit 204, and broadcasts and transmits data modulated by the wireless transmission unit 302 to the terminal stations 1 to 6.

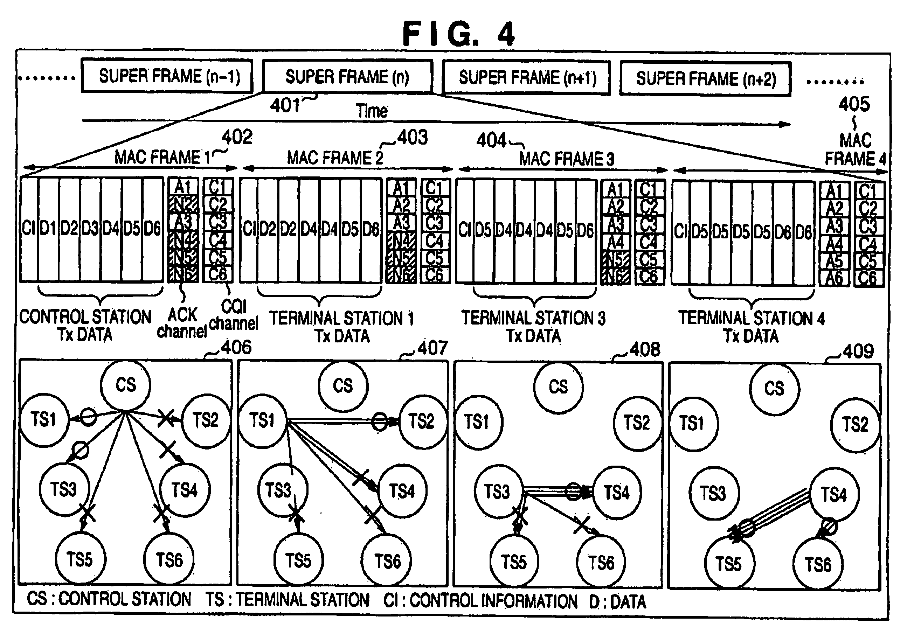

FIG. 4 is a diagram showing a format of a super frame in the present embodiment.

As shown in FIG. 4, a super frame is a frame having a repetition cycle for transmitting data in accordance with the relay order determined by the control station 101.

As can be seen from the detailed view of a super frame 401, the terminal stations 1, 3, and 4 are selected as relay stations, and source data is relayed in this order. In a super frame, time slots are allocated for transmission data from the control station and transmission data from the relay terminal stations 1, 3, and 4.. The control station 101 and the relay terminal stations switch transmission according to the time slots.

The super frame 401 includes a plurality of MAC frames 501. The MAC frames 501 are constituted by control information, a plurality of slots for storing data, an ACK channel, and a CQI channel.

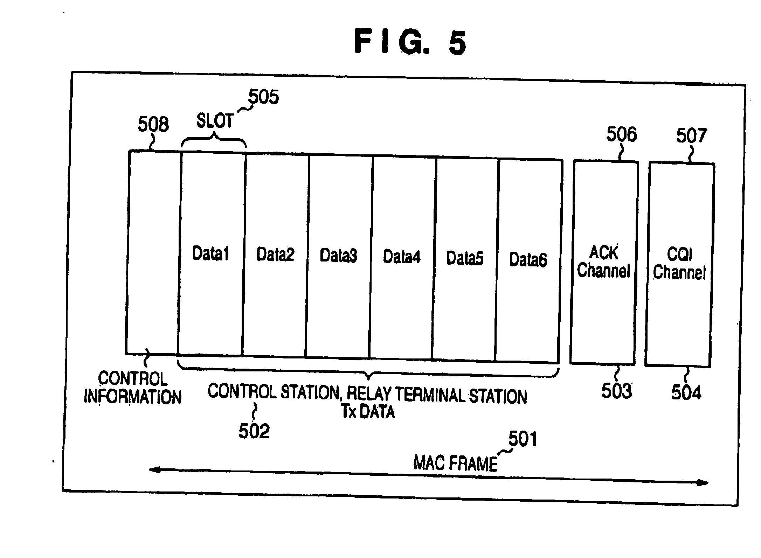

FIG. 5 shows the detailed configuration of a MAC frame 501. Control information 508 is disposed at the head of the MAC frame 501. A data portion 502 transmitted:by the control station 101 or the relay terminal stations 1 to 6 is disposed after the control information 508. Particularly, the data portion 502 transmitted by the relay terminal station is defined as a relay packet, and includes source data. Furthermore, an ACK channel 506 carrying reception responses from the terminal stations to a transmitted relay packet is disposed after the data portion 502.

Moreover, a CQI channel 507 carrying information on channel quality transmitted from the terminal stations is allocated after the ACK channel 506. The data portion 502 has a plurality of (six, in this case) slots 505, and one piece of data to be transmitted to a terminal station is stored in each slot.

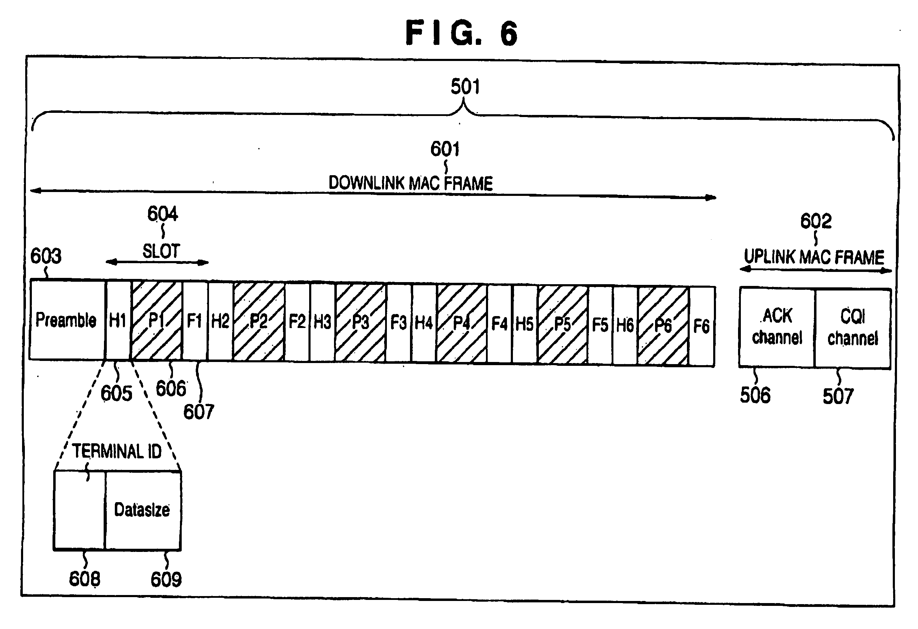

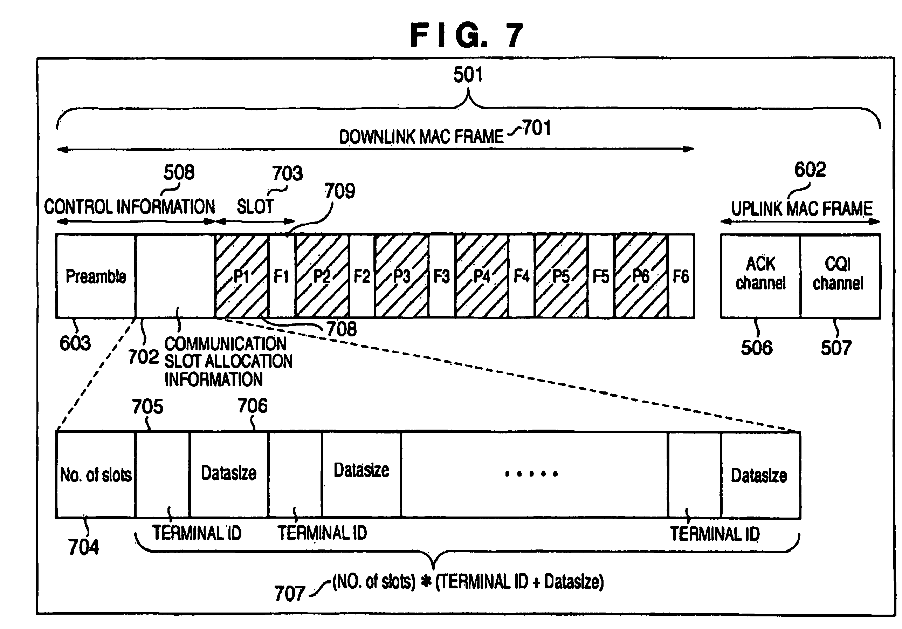

FIGS. 6 and 7 are diagrams showing example packet configurations of the MAC frame 501. The packet configuration can be divided into two formats based on a method for identifying a payload used by the terminal stations 1 to 6.

FIG. 6 shows a format in which a header including an identification number (ID) of a terminal station is added before the payload, which is constituted by AV data for terminal stations. The MAC frame 501 is constituted by a downlink MAC frame 601 and an uplink MAC frame 602.

The downlink MAC frame 601 is constituted by a preamble portion 603 for synchronization acquisition and six slots 604. The uplink MAC frame 602 is constituted by the ACK channel 506 and the CQI channel 507.

Each of the slots 604 includes a slot header 605, a payload portion 606, and a frame check sequence 607, which is an error detection code. The slot header 605 is constituted by an identification number (ID) 608 of the terminal station and information 609 indicating the size of the payload portion 606.

Thus, when the packet configuration of a MAC frame shown in FIG. 6 is used, each terminal station confirms the terminal ID included in the slot header of all the slots. Then, each terminal station determines that the data is addressed to the station itself when the ID corresponds to its own terminal station ID, performs decoding processing, and performs ACK determination processing.

The configuration shown in FIG. 7 is another format in which compiled slot allocation information is added to a relay packet. The MAC frame 501 is constituted by a downlink MAC frame 701 and the uplink MAC frame 602.

The downlink MAC frame 701 is constituted by the preamble portion 603 for synchronization acquisition, communication slot allocation information 702, and six slots 703. The communication slot allocation information 702 indicates for which terminal station the data in the slots are allocated.

The uplink MAC frame 602 is constituted by the ACK channel 506 and the CQI channel 507. Moreover, each of the slots 703 is constituted by a payload portion 708 and a frame check sequence 709, which is an error detection code.

The communication slot allocation information 702 is constituted by information 704 indicating the number of slots, as well as a terminal station ID 705 and a data size 706 of the payload portion 708 for each of the terminal stations 1 to 6. Thus, when the packet configuration of a MAC frame shown in FIG. 7 is used, each of the terminal stations 1 to 6 confirms the terminal ID included in the slot allocation information, first. With this confirmation, each terminal station obtains data addressed to the station itself from the following data that appears in a downlink MAC frame, performs decoding processing, and performs ACK determination processing.

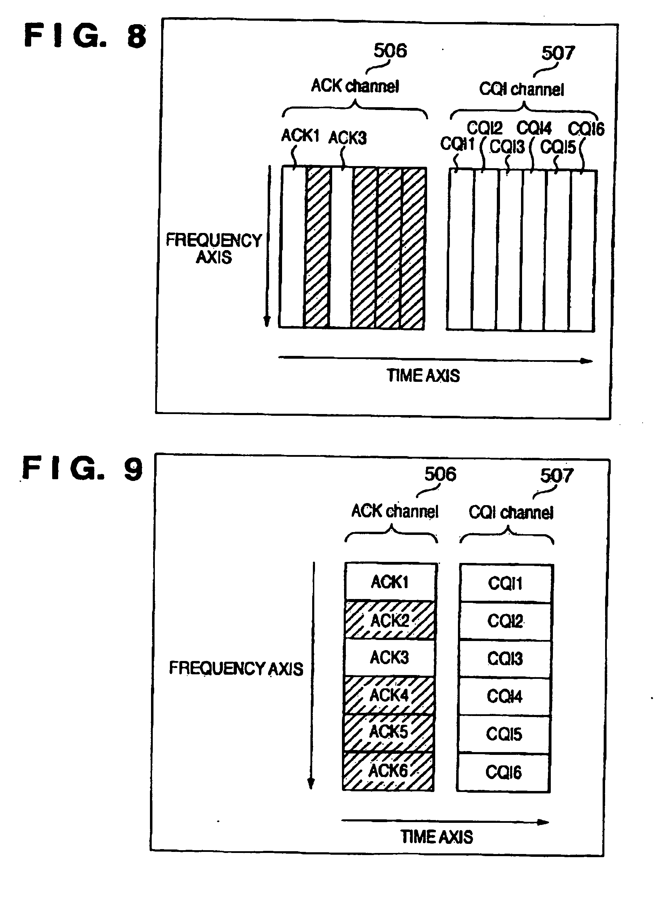

FIG. 8 shows the configuration of the ACK channel 506 and the CQI channel 507. Information on a reception response that corresponds to ACK or NAK with respect to data addressed to the terminal stations 1 to 6 themselves is stored in the ACK channel 506.. In the present embodiment, a received signal strength indicator (hereinafter, referred to as "RSSI") is stored in the CQI channel 507 as information on channel quality at the terminal stations 1 to 6.

As shown in FIG. 8, when a plurality of terminal stations broadcast and transmit data in the same MAC frame, such data is transmitted using time division multiplexing. This is because even when a plurality of terminal stations broadcast and transmit data in the same MAC frame, data in the ACK channel 506 and the CQI channel 507 will not collide.

With reference to FIG. 4, data transmission/reception processing using super frames will be described in chronological order. In this example, a super frame is constituted by four MAC frames.

First, the control station broadcasts:and transmits source data using a MAC frame 1 at the head. Subsequently, the terminal stations 1, 3, and 4 transmit source data as relay stations, using MAC frames 2, 3, and 4, respectively.

The drawings shown in the squares 406 to 409 in FIG. 4 show the reception status between the control station 101 and the terminal stations 1 to 6 for each MAC frame. Using the first MAC frame 1, the control station 101 transmits data to be transmitted slot by slot to the terminal stations 1 to 6. As a result, as shown in the drawing in the square 406 in FIG. 4, the terminal stations 1 and 3 successfully received source data, and sent back ACK. Meanwhile, the terminal stations other than the above stations failed to receive data, and sent back a retransmission request (NAK). Not only the control station 101, but also other terminals receive. ACK and NACK in the ACK channel. Consequently, the terminals that received the ACK channel can grasp the reception status of the terminals.

Next, when transmitting a second MAC frame 2, the relay terminal station 1 grasps that the terminal stations 1 and 3 have successfully received data by receiving the ACK channel of the first uplink MAC frame 1 indicating the reception status of the terminal stations. Thus, the relay terminal station 1 schedules data to be transmitted to the terminal stations 2, 4, 5, and 6, but not to the terminal stations 1 and 3. A scheduling method will be described in detail later.

As a result of the scheduling, the relay terminal station 1 allocates redundant slots to respective data for the terminal stations 2 and 4, and allocates two slots each for respective data for the terminal stations 2 and 4. On the other hand, the relay terminal station 1 allocates one slot each for data for the terminal stations 5 and 6. Then, data are stored in these slots in one frame and transmitted. As shown in the drawing in the square 407 in FIG. 4, as for this frame, only the terminal station 2 successfully received data and sent back ACK. Meanwhile, the remaining terminal stations failed to receive data and sent back a retransmission request (NAK).

When transmitting a third MAC frame 3, the ACK channels of the first and second uplink MAC frames 1 and 2 that indicate reception statuses of the terminal stations have been received; accordingly, the relay terminal station 3 grasps that the terminal stations 1 to 3 have successfully received source data. Thus, the relay terminal station 3 schedules data for the terminal station 4, 5, and 6, but not for the terminal stations 1, 2, and 3.

As a result of this, the relay terminal station 3 allocates two redundant slots for data addressed to the terminal station 4 and allocates three slots in total for data addressed to the terminal station 4. Also, the relay terminal station 3 allocates one redundant slot for data addressed to the terminal station 5 and allocates two slots in total for data addressed to the terminal station 5. The relay terminal station 3 does not allocate a redundant slot for data addressed to the terminal station 6, but allocates one slot. Then, data are stored in one frame according to this allocation and transmitted. As a result of transmission, as shown in the drawing in the square 408 in FIG. 4, the terminal station 4 successfully received source data, and sent back ACK. Meanwhile, the terminal stations other than that failed to receive source data.

When transmitting a fourth MAC frame 4 that is the end of the relay, the ACK channels of the first to third MAC frames 1 to 3 that indicate reception statuses of the terminal stations have been received; accordingly, the relay terminal station 4 grasps that the terminal stations 1 to 4 have successfully received source data. Thus, the relay terminal station 4 schedules data for the terminal stations 5 and 6.

As a result of the scheduling, the relay terminal station 4 allocates three redundant slots for data to be transmitted to the terminal station 5 and allocates four slots in total for data addressed to the terminal station 5. Also, the relay terminal station 4 allocates one redundant slot for data to be transmitted to the terminal station 6 and allocates two slots in total for data addressed to the terminal station 6. Then, data are stored in these slots in one frame and transmitted. As a result, the drawing in the square 409 in FIG. 4 shows that both of the terminal stations 5 and 6 successfully received source data, and all the terminal stations successfully received data using four MAC frames, eventually.

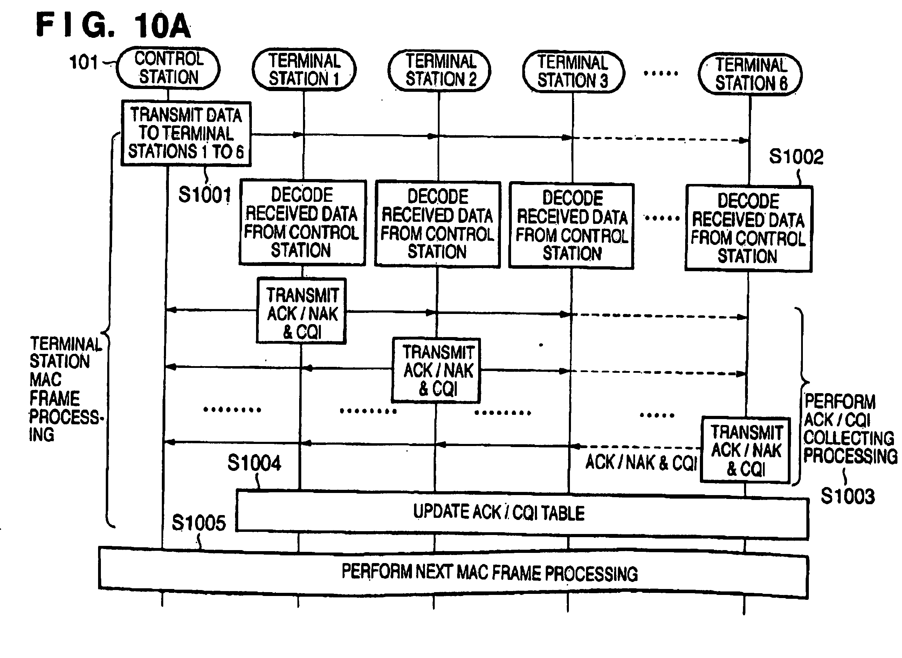

Next, with reference to FIG. 10A, an example of processing when receiving/transmitting data between the control station 101 and the terminal stations 1 to 6 is described.

FIG. 10A shows a sequence that starts with data transmission using the first MAC frame 402 from the control station, continues with data being received by relay terminal stations, and continues up to each terminal station updating a CQI/ACK table.

In step S1001, the control station 101 transmits data for the terminal stations 1 to 6. Before data is transmitted, based on the instructions from the control unit 305 of the control station 101, the CQI calculator 306 analyzes channel quality indicators (CQIs) using data obtained through a training sequence performed before data transmission and generates the CQI table 311. Further, based on the instructions from the control unit 305, the relay order determination unit 308 selects a relay station that is evaluated as an optimal station from the terminal stations 1 to 6 using data in the CQI table 311 so as to determine the relay order of relay terminal stations. Then, the wireless transmission unit 302 transmits transmission data including relay order data generated by the relay order information generating unit 309 and source data to the terminal stations 1 to 6, at the timing of the data portion of the first MAC frame 402 as shown in FIG. 4.

In step S1002, the terminal stations receive source data transmitted from the control station 101, via the antenna 201. Then, the wireless reception unit 203 demodulates the received source data, and the received data decoding unit 208 converts the demodulated data into the original data.

In step S1003, ACK/CQI collecting processing is performed. In this processing, the ACK channels generating unit 209 of each terminal station detects errors in the received data based on the instructions from the control unit 205. When the received data includes no error or errors are corrected such that the received data can be reconstructed to the original data, ACK is sent back as a reception response. Further, when the received data cannot be reconstructed to the original data due to an error in the data, NAK is sent back as a reception response. These reception responses are sent back as ACK/NAK channel data. On the other hand, the CQI calculator 206 analyzes channel quality indicators (CQIs) upon receiving data signals that are sent back. Thereafter, the CQI channels generating unit 207 generates a CQI channel signal using the analyzed CQIs. The wireless transmission unit 202 broadcasts and transmits generated ACK channel signals and CQI channel signals, respectively, at the timing of the ACK channel and the CQI channel in the first MAC frame 402 as shown in FIG. 4.

Each terminal station receives, via the antenna 201, the ACK channel signals and CQI channel signals that have been broadcast and transmitted from the other terminal stations.

In step S1004, the control unit 205 of each terminal station updates the CQI/ACK table 211 stored in the storage unit 210 based on the ACK channel signals and CQI channel signals that have been received from the other terminal stations. When the station fails to receive ACK/NAK and CQIs, the control unit 205 does not update information in the CQI/ACK table 211 of the storage unit 210 and keeps the original information.

In step S1005, the next relay terminal stations 1, 3, and 4 perform processing using the MAC frames 2, 3, and 4, respectively.

Next, a sequence based on the second MAC frame 403 described with reference to FIG. 4 is described.

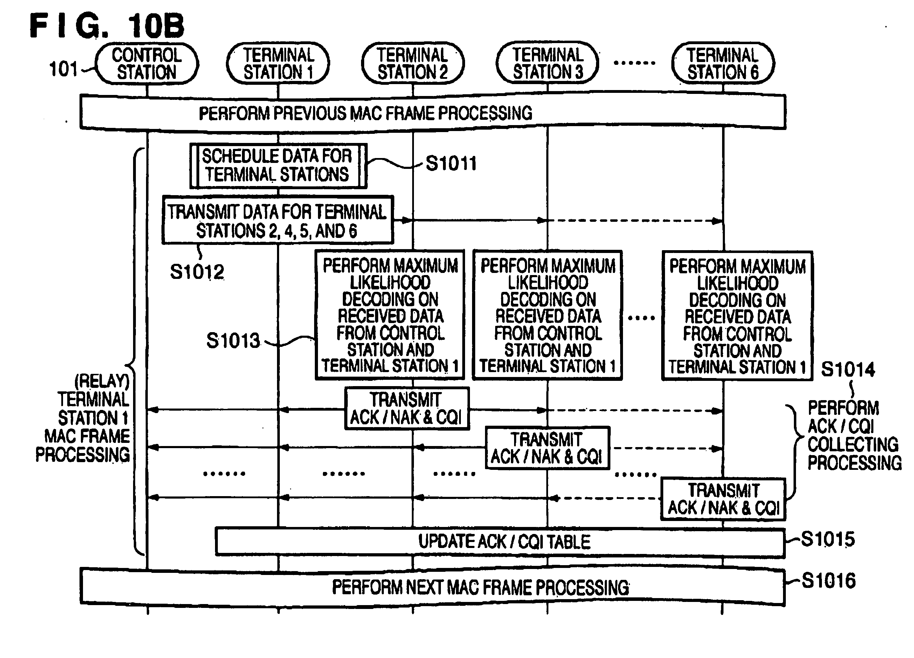

FIG. 10B shows an overall sequence performed by the relay terminal station 1 using the second MAC frame 403, the sequence starting with scheduling data for terminal stations and continuing up to updating the CQI/ACK table.

In step S1011, after finishing the previous MAC frame processing, the terminal station 1 serving as a relay terminal station starts scheduling data for terminal stations to be relayed and transmitted. First, the relay data priority calculator 217 of the relay terminal station 1 analyzes priories of the terminal stations 2, 4, 5, and 6 that failed to receive data, using the CQI/ACK table 211 based on the instructions from the control unit 205, and sets data redundancy. That is, the number of redundant slots for transmitting data to the terminals as described above is determined. The relay packet generating unit 216 generates the relay packet 212 based on the set data redundancy for the terminal stations according to the instructions from the control unit 205.

In step S1012, the wireless transmission unit 202 of the relay terminal station 1 modulates the relay packet generated by the relay packet generating unit 216 and transmits the data to the terminal stations 2, 4, 5, and 6 at the timing of the second MAC frame 403.

In step S1013, the terminal stations receive source data transmitted from the relay terminal station 1. The wireless reception unit 203 identifies a relay packet addressed to the station itself by obtaining the terminal ID 608 of the slot header 605 of the relay packet, and receives the data. The received data decoding unit 208 performs maximum likelihood decoding on the received data, using data received this time and data received from the control station in the previous processing using the first MAC frame 402.

In step S1014, ACK/CQI collecting processing is performed. In this processing, the ACK channels generating unit 209 of each terminal station detects errors in the received data based on the instructions from the control unit .205. When the received data includes no error or errors are corrected such that the received data can be reconstructed to the original data, ACK is sent back as a reception response. Further, when the data includes errors, and cannot be reconstructed to the original data, NAK is sent back as a reception response. These reception responses are sent back as ACK/NAK channel data. On the other hand, the CQI calculator 206 analyzes channel quality indicators (CQIs) upon receiving the data signals that have been sent back. Thereafter, the CQI channels generating unit 207 generates a CQI channel signal using the analyzed CQIs. The wireless transmission unit 202 broadcasts and transmits generated ACK channel signals and CQI channel signals, respectively, at the timing of the ACK channel and CQI channel in the second MAC frame 402 in FIG. 4.

Each terminal station receives the ACK channel signals and CQI channel signals broadcast and transmitted from the other terminal stations, via the antenna. 201.

In step S1015, the control unit 205 of each terminal station updates the CQI/ACK table 211 stored in the storage unit 210 based on the ACK channel signals and CQI channel signals received from the other terminal stations. When the station failed to receive the ACK/NAK and CQI, the control unit 205 does not update information in the CQI/ACK table 211 of the storage unit 210 and keeps the original information.

In step S1016, the relay terminal station (terminal station 3) designated as the next relay station by the information on the relay order performs processing using the MAC frame 3 (404).

In this way, within the cycle for one super frame, processing using the MAC frame 1 as shown in FIG. 10A is performed once, and processing using the MAC frame 2 as shown in FIG. 10B is repeated for the number of relays (in this example, three times).

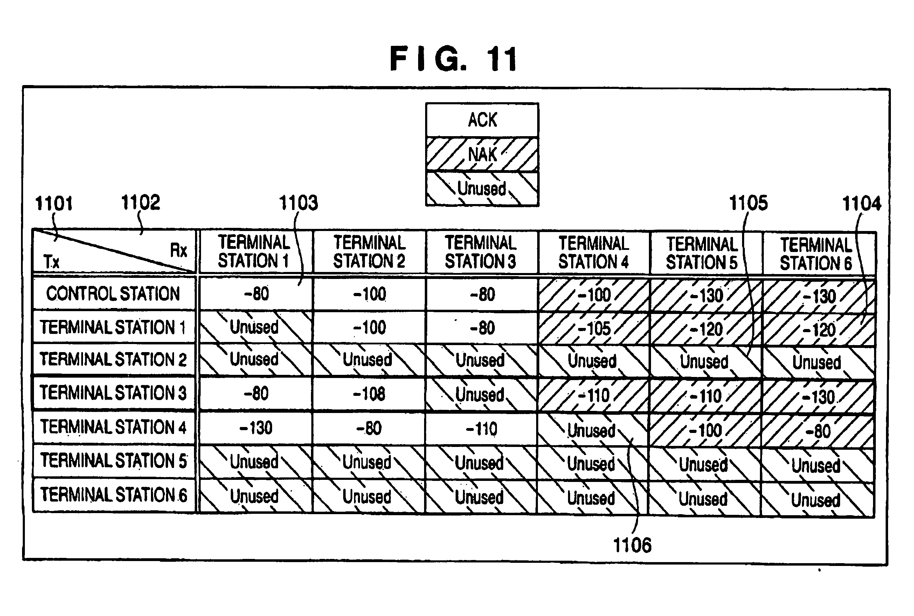

Next, the processing for scheduling data for terminal stations performed by a relay terminal station is described in detail with reference to FIGS. 11 to 14.

Scheduling data for terminal stations that failed to receive source data is performed based on the CQI/ACK table held in each terminal station. The CQI/ACK table is constructed based on relay order information defining the relay order of relay terminal stations in a super frame, and reception response signals and CQI signals collected by each terminal station from other terminal stations.

FIG. 11 shows a CQI/ACK table in the relay terminal station 3. In the table in FIG. 11, the vertical axis Tx 1101 lists transmitters of terminal station data, and the horizontal axis Rx 1102 lists terminal stations serving as receivers. CQI information regarding a RSSI in the combination of a predetermined transmitter and receiver is written in each cell as a numeric value. ACK/NAK information is identified based on patterns of cells (ACK: not shaded/NAK: shaded).

For example, the data in cell 1103 indicates that the received signal strength indicator (RSSI) at the terminal station 1 is -80 (dBm) when the control station 101 transmits data. Also, from FIG. 11, it is apparent that the terminal station 3 has already received ACK from the terminal station 1 using the MAC frame already received in the past. This result shows that the terminal station 3 recognizes that the terminal station 1 has successfully received data.

Further, the data in cell 1104 indicates that the received signal strength indicator (RSSI) at the terminal station 6 is -120 (dBm) when the relay terminal station 1 transmitted data. Also, the cell indicates that the terminal station 3 has not received ACK from the terminal station 6 yet, and recognizes that the terminal station 6 has not successfully received data.

Moreover, "Unused" in cell 1105 indicates that the cell is unused (null) since the terminal station 2 is not a target for data transmission. Further, "Unused" in cell 1106 indicates that the relay terminal station 4 is the terminal station itself and thus is not a target for data transmission. Note that the values of the received signal strength indicators at the terminal stations are shown as values measured using the previous super frame.

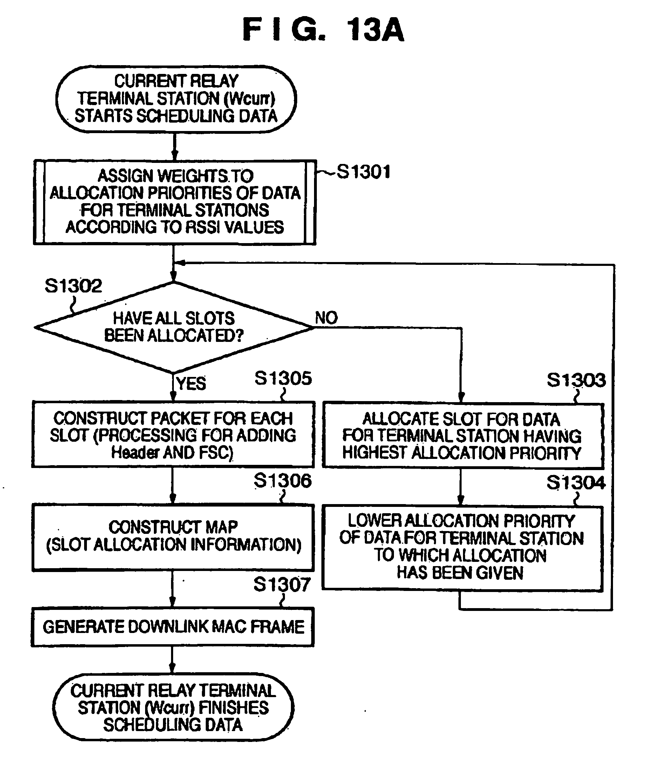

Next, FIGS. 13A, 13B-1 and 13B-2 are flowcharts showing an algorithm for scheduling data for terminal stations performed by a relay terminal station.

In step S1301, the current relay terminal station (Wcurr) sets priorities for determining the number of repeated redundant data addressed to the terminal stations in order to retransmit source data to the terminal stations that failed to receive source data. This priority is set through processing shown in FIG. 13B-1 and FIG. 13B-2.

In step S1311, the relay data priority calculator 217 of the relay terminal station (Wcurr) extracts terminal stations in a NAK state based on the instructions from the control unit 205, using the CQI/ACK table 211 stored in the storage unit 210. That is, terminal stations (relay destination communication station) that have not received source data are extracted. Then, it is checked whether priorities have been set for data for all the terminal stations in the NAK state. When priorities have not been set, the processing branches to step S1312. When priorities have been set for all, the processing ends.

In step S1312, the control unit 205 selects one of the data sets addressed to the terminal stations in the NAK state, from data sets addressed to terminal stations whose priorities have not been analyzed yet.

In step S1313, the relay data priority calculator 217 refers to the CQI/ACK table 211 based on the instructions from the control unit 205. Then, the relay data priority calculator 217 obtains a received signal strength indicator (RSSIcurr) when the relay terminal station transmitted data to the selected terminal station, as a first reception level.

In step S1314, the control unit 205 increases priority of the selected terminal station data using the relay data priority calculator 217, so that the number of slots to be allocated (redundancies) in the MAC frame for data for the terminal station is greater when the value of a received signal strength indicator is smaller. The setting is an example of a setting unit for setting priority such that the redundancy of the data for a terminal station in one frame is greater when channel quality at the extracted terminal station is lower. The redundancy of the data is greater when the transmission channel is in an inferior state with this priority setting, thus increasing the probability that a terminal station with an inferior transmission channel can properly receive data.

In step S1315, the control unit 205 checks whether or not this is the last relay station, and there is a next relay terminal station (Wafter) using the relay data priority calculator 217. When there is a next relay terminal station (Wafter), the control unit moves to the processing of step S1316. When there is not a next relay terminal station (Wafter), since it is necessary for the current relay terminal station (Wcurr) to transmit data, the control unit 205 shifts to the processing of step S1322 and increases priority of the number of slots allocated for data for the selected terminal station. In this step, it is recognized that this is the last terminal station, and the redundancy of the data for a terminal station that has not properly received data is increased, thus increasing the probability that the terminal station can properly receive data.

In step S1316, the control unit 205 checks whether the received data decoded by the received data decoding unit 208 has been properly decoded using the relay data priority calculator 217. When the data has not been properly decoded, the control unit 205 determines that the next relay terminal station (Wafter) should retransmit data for the terminal station that failed to receive data. The next relay terminal station is caused to transmit data based on this determination, thus preventing data from being wastefully transmitted. In this case, the control unit 205 shifts to the processing of step S1320 so as to decrease priority of the number of slots allocated for data for the selected terminal station. When the received data has been properly decoded, the processing proceeds to step S1317.

In step S1317, the control unit 205 refers to the CQI/ACK table 211 and obtains a received signal strength indicator (RSSIafter) at a selected terminal station with respect to the next relay terminal station as a second reception level.

In step S1318, the control unit 205 checks whether or not the first reception level is lower than a first threshold value (the minimum electric field intensity allowed for a transmission channel between the current relay terminal station and the selected terminal station) using the relay data priority calculator 217. When the level is determined to be lower, the condition of a reception level (RSSIcurr) at the selected terminal stations with respect to the current relay station is not good. Accordingly, there are cases in which the next relay terminal station (Wafter) preferably relays the selected terminal station data; thus, the control unit 205 shifts to the processing of step S1321. When the first reception level is greater than the first threshold value, the control unit 205 moves to step S1319.

In step S1319, the relay data priority calculator 217 compares the second reception level to the first reception level. When the second reception level is greater than the first reception level, and the difference between the second reception level and the first reception level is greater than a second threshold value, the relay data priority calculator 217 determines that the next relay terminal station (Wafter) should relay source data (a second threshold value herein is a value indicating the permissible range for the minimum electric field intensity of the communication transmission channel). Then, the processing proceeds to step S1320. When the second reception level is lower than the first reception level, the processing branches to step S1323.

In step S1320, the control unit 205 lowers priority so as to decrease the number of redundant slots for data for the selected terminal station. In this step, the next relay terminal station preferentially transmits terminal data, priorities of data transmitted by the current relay terminal station are lowered, which increases the priority of data for other terminal stations; thus, the probability that other terminal stations can properly receive data is increased.

In step S1321, when the reception level 2 is lower than a third threshold value as a result of analysis by the relay data priority calculator 217, it is determined that the current relay terminal station (Wcurr) should relay the selected terminal station data. The third threshold value is the minimum electric field intensity allowed for a transmission channel between the next replay terminal station and the selected terminal station. With this determination, priority of data transmitted by the current relay terminal station is increased while the next relay terminal station with an inferior transmission channel is not expected to transmit; thus, the probability that the selected terminal station can properly receive data is increased. Then, the processing proceeds to step S1322. The control unit 205 shifts to the processing of step S1323 when the reception level 2 is greater than the third threshold value.

In step S1322, the control unit 205 increases priority so as to increase the number of redundant slots for data for the selected terminal station.

In step S1323, the control unit 205 sets a flag indicating that the priority has been set so as to determine the redundancy of the data for the selected terminal station. Then, the processing returns to step S1311, and priority is set again for data for a terminal station for which priority has not been set.

In step S1302, the control unit 205 checks a setting status of priority used when allocating redundant slots for data for a terminal station that failed to receive data. When allocation of all the slots is not completed, the control unit 205 moves to the processing of step S1303, and allocates an idle slot for data. When allocation of all the slots is completed, the processing branches to step S1305.

In step S1303, the control unit 205 selects data for a terminal station having the highest allocation priority, and allocates a slot therefor.

In, order to avoid slots from being concentratedly allocated for data addressed to a specific terminal station, the control unit 205 lowers the allocation priority of data for a terminal station to which allocation has been given, in step S1304. After this processing, the control unit again shifts to the processing of step S1302.

For example, a fourth threshold value is set in order to determine the concentration, which is given by the ratio of the number of slots used for transmitting data to the same terminal station to the total number of slots. Now, it is assumed that the fourth threshold value is 70 percent or less. Also, it is assumed that the terminal stations that sent back NAK are two stations, A and B, and of the six slots, five slots are allocated to the terminal station A while one slot is allocated to the terminal station B. In this case, concentration of the terminal station A is 87.5 percent, which exceeds 70 percent indicated by the fourth threshold value. Accordingly, the priority of the terminal station A is lowered such that concentration is made lower than 70 percent. In this case, the number of slots allocated to the terminal station A is decreased from five to four, and two slots are allocated to the terminal station B; consequently, the concentration is set to the prescribed 70% or less.

In step S1305, allocation of all the slots is completed, and the relay packet generating unit 216 adds a header and a frame check sequence (FCS) for each slot.

In step S1306, the relay packet generating unit 216 constructs the communication slot allocation information 702 to be inserted into the MAC frame in accordance with all the slots being allocated in step S1305. This allocation information indicates, for the six slots in the MAC frame, in which slot the data addressed to which terminal station is stored. The relay packet generating unit 216 generates information for each slot, that is, data 1 to 6 in the data portion 502, based on the allocation information. Information generated for each slot is constituted by the terminal ID 608 of the terminal station to which data is transmitted, the data size 609 indicating the data size of payload, the payload portion 606, and the frame check sequence 607 for error detection. It should be noted that when the packet configuration of a MAC frame shown in FIG. 9 is adopted, the communication slot allocation information 702 is not needed.

In step S1307, the relay packet generating unit 216 adds the preamble portion 603 for synchronization shown in FIG. 7 so as to generate a downlink MAC frame.

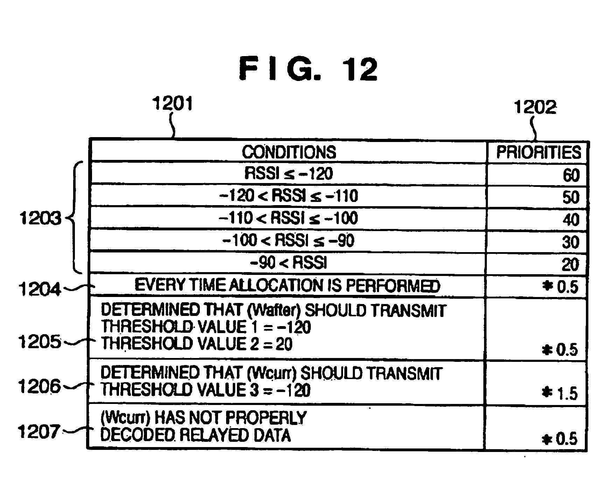

Next, with reference to FIG. 12, example rules for determining the allocation priorities of data for terminal stations are described. A table used for determining such rules is used in the scheduling algorithm described above.

A left column 1201 of the table shows conditions for setting priorities, and a right column 1202 shows numeric values of priorities that are set according to each condition. Numeric values of priorities with respect to the values of received signal strength indicators are registered in rows 1203 of the stable. For example, when RSSI = -105 (dBm) is obtained as channel quality, priority (40) for -105 dBm is obtained from the table. Further, row 1204 shows that the priority used thus far is multiplied by 0.5 (*0.5) (here, * indicates multiplication) since a new priority is calculated every time data for a terminal station is allocated to a slot. This unit that the priority is to have a half the original value. This priority setting corresponds to processing in step S1304 shown in FIG. 13A: the allocation priority of data for a terminal station that was allocated is lowered in order to avoid allocation from being concentratedly given to data for a specific terminal station.

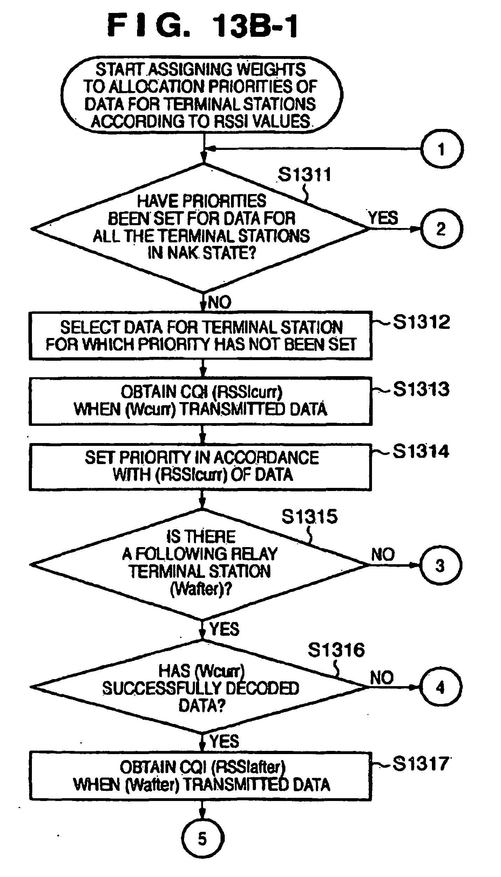

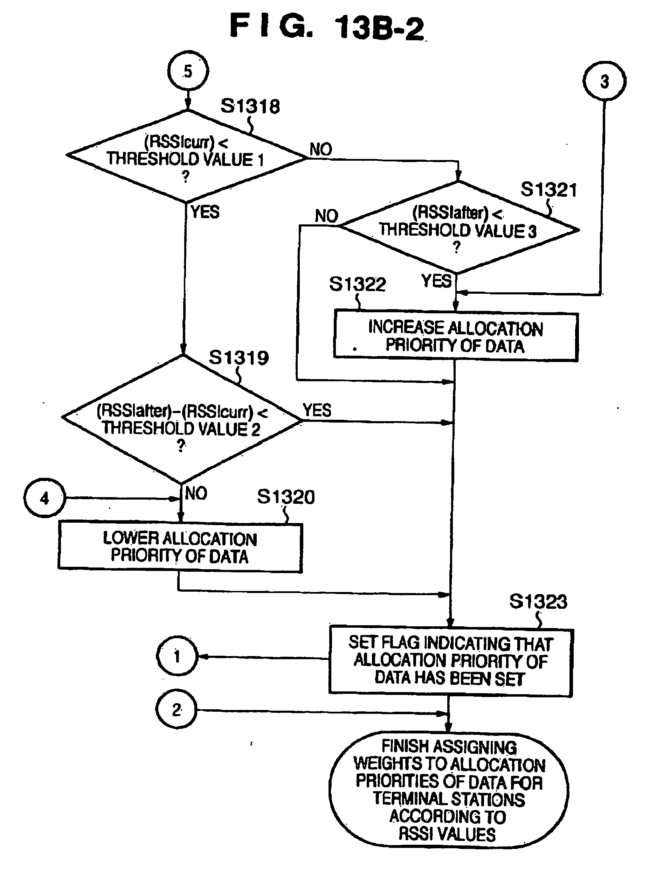

Further, row 1205 shows that the priority used thus far is multiplied by 0.5 (*0.5) to calculate a new priority when it is determined that the next relay terminal station should transmit data. This corresponds to processing for lowering priority in steps S1318, S1319, and S1320 in FIG. 13B-2.

Row 1206 shows that the priority used thus far is multiplied by 1.5 (*1.5) to calculate a new priority when it is determined that the current relay terminal station should transmit data. This corresponds to processing for increasing priority in steps S1318, S1321, and S1322 in FIG. 13B-2.

Furthermore, row 1207 shows that the priority used thus far is multiplied by 0.5 (*0.5) to calculate a new priority when the current relay terminal station has not properly decoded relayed data. This corresponds to processing for lowering priority in steps S1316 and S1320 in FIG. 13B-1 and FIG. 13B-2.

Next, when allocation for redundant data is performed, the CQI/ACK table as shown in FIG. 11 and the table for determining priorities as shown in FIG. 12 are used. FIG. 14 shows results obtained through calculation of allocation for redundant data at the relay terminal station 3. Note that in this example, it is assumed that the relay terminal station did not have a decoding error regarding data addressed to other terminal stations. Cells of a column 1401 in this table show terminal stations in the NAK state for which the terminal station 3 needs to perform allocation for data. The control unit 205 selects the terminal stations 4, 5, and 6 by referring to the CQI/ACK table in FIG. 11.

The slot number in row 1402 of the table indicates slot numbers of slots to be allocated in a third MAC frame. In this example, one relay packet is constituted by six slots. Priorities of allocation to the predetermined terminal stations in the predetermined slots are entered as numeric values in the cells of the table. The results of allocation are shown using patterns of cells (allocated slot: shaded/not-allocated slot: not shaded).

For example, cell 1403 of the table indicates that the priority of allocation to the terminal station 4 in the slot 1 is 75. Since the station has the highest priority among the terminal stations in the same slot, the control unit 205 selects the terminal station 4 as a terminal station for which data is given allocation. In order to show this selection, the cell is shaded.

Also, cell 1404 shows that the priority of allocation to the terminal station 6 in the slot 1 is 30. The control unit 205 does not select the terminal station 6 as a terminal station given allocation because the station does not have the highest priority among the terminal stations in the same slot. Thus, the cell is not shaded.

As described above, in the communication system of the present invention, a relay station receives relay order information, reception responses from communication stations on transmission channels that the relay station itself uses, and channel quality information between the communication stations. Furthermore, the relay station holds reception responses from the communication stations on the transmission channels that other relay stations use and channel quality information as a CQI/ACK table. Consequently, the relay station dynamically controls the allocation redundancy of the data to be relayed for a communication station, according to contents in the table. Therefore, this can avoid wasteful consumption of communication resources, and can improve error resistance as a communication system at the same time.

Note that a broadcast transmission method is applied for a transmission method that the control station 101 and the relay terminal stations 2 to 6 use in the present embodiment. However, even when a multicast transmission method is applied for a transmission method, it is possible to achieve an effect similar to that achieved by applying a broadcast transmission method.

### Second Embodiment

An example of transmission using a frequency division multiplex scheme is described. With this frequency division multiplex scheme, data that terminal stations broadcast and transmit is transmitted such that the data will not collide even when a plurality of terminal stations broadcast and transmit data in the same MAC frame. FIG. 9 is a diagram showing a format for the ACK channel 506 and CQI channel 507 under a frequency division multiplex scheme.

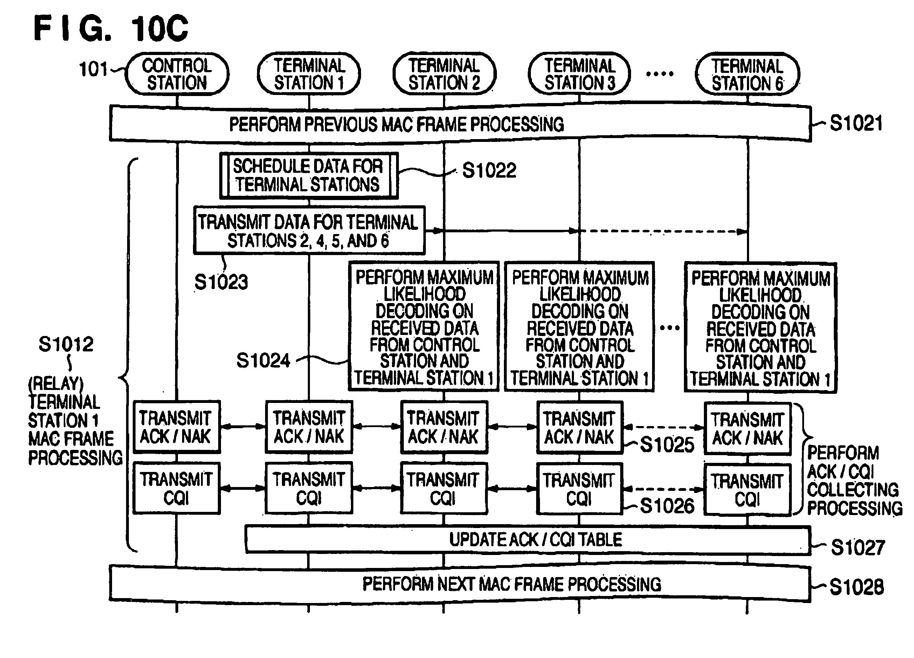

FIG. 10C is a diagram showing a transmission/reception sequence between the control station 101 and the terminal stations 1 to 6 when the ACK channel 506 and the CQI channel 507 are transmitted.

In step S1021, the control station 101 ends the precious MAC frame processing.

In step S1022, the terminal station 1 serving as a relay terminal station schedules data that is addressed to terminal stations and that is to be relayed and transmitted. First, the relay data priority calculator of the relay terminal station 1 analyzes priorities of the terminal stations 2, 4, 5, and 6 that failed to receive data using the CQI/ACK table, and sets the redundancy of the data. The relay packet generating unit generates a relay packet based on redundant data for a terminal station that has been set.

In step S1023, the wireless transmission unit modulates a relay packet generated by the relay packet generating unit, and transmits to the terminal stations 2, 4, 5, and 6 at the timing of the MAC frame 2.

In step S1024, each terminal station receives source data transmitted using a frequency allocated to the station itself. A received data decode unit performs maximum likelihood decoding on the received data using the received relay packet and source data received from the control station in the previous MAC frame processing.

In step S1025, each ACK channels generating unit of the terminal station 2, 4, 5, and 6 generates ACK/NAK channel data as a reception response. Then, the wireless transmission unit broadcasts and transmits ACK/NAK channel data using a different frequency for each terminal station, at the same timing as allocated to the ACK channel as shown in FIG. 9.

In step S1026, the CQI calculator analyzes a channel quality indicator (CQI) when data is received, and the CQI channels generating unit generates a CQI channel signal using the analyzed CQI. The wireless transmission unit concurrently broadcasts and transmits the generated CQI channel signals, respectively, using a different frequency for each terminal station, at the timing allocated to the CQI channel as shown in FIG. 9.

In step S1027, each terminal station receives ACK channel signals and CQI channel signals that are broadcast and transmitted using different frequencies from the other terminal stations. Using the received ACK channel signals and CQI channel signals, the control unit updates the CQI/ACK table stored in the storage unit. When a terminal station failed to receive ACK/NAK and CQIs that are transmitted from the other terminal stations, the control unit does not update information on the CQI/ACK table and keeps the original information.

In step S1028, the next relay terminal station (terminal station 3) performs MAC frame processing.

As described above, according to the above embodiments, another communication station retransmits data, instead of the control station, to a communication station that could not properly receive data from the control station. Particularly, a communication station that has a channel in a better state than that of the control station retransmits data to a communication station that is a target for retransmission (relay destination communication station); accordingly, the probability of success of retransmission can be increased. Moreover, data to be retransmitted is made redundant and retransmitted according to a reception status at a communication station; thus, success of retransmission can be further increased. Furthermore, a slot (channel) used for transmitting data to a communication station that successfully received the data is used for a slot (channel) for retransmission; thus, communication resources can be efficiently used. As a result of this, it is possible to avoid wasteful consumption of communication resources, and increase throughput.

### Other Embodiments

Aspects of the present invention can also be realized by a computer of a system or apparatus (or devices such as a CPU or MPU) that reads out and executes a program recorded on a memory device to perform the functions of the above-described embodiments, and by a method, the steps of which are performed by a computer of a system or apparatus by, for example, reading out and executing a program recorded on a memory device to perform the functions of the above-described embodiments. For this purpose, the program is provided to the computer for example via a network or from a recording medium of various types serving as the memory device (e.g., computer-readable medium).

## Claims

1. A communication system having a plurality of communication stations, the plurality of communication stations including a control station (101) and a plurality of relay stations (1 to 6) for relaying data, **characterised by** each relay station (1 to 6) comprising:
a reception means (203) for receiving, from each of a plurality of the other relay stations (1 to 6), a reception response and reception quality information indicating reception quality of data at the other relay station (1 to 6) with respect to data to be relayed, which data is originally transmitted from the control station (101) to the plurality of relay stations (1 to 6);
a selection means (215) for selecting a relay station (1 to 6) to which the received data is to be relayed based on the reception response and the reception quality information received by the reception means;
a setting means (217) for setting redundancy of data when data is to be relayed to the selected relay station based on the reception response and the reception quality of data at the selected relay station selected by the selection means; and
a transmission means (202) for relaying data to the selected relay station in accordance with the redundancy of data set by the setting means.

2. A relay station for relaying data, **characterised by** comprising:
a reception means for receiving, from each of a plurality of other relay stations (1 to 6), a reception response and reception quality information indicating reception quality of data at the other relay station with respect to data to be relayed, which data is originally transmitted from a control station (101) to the plurality of relay stations (1 to 6);
a selection means (215) for selecting a relay station (1 to 6) to which the received data is to be relayed based on the reception response and the reception quality information received by the reception means;
a setting means (217) for setting redundancy of data when data is to be relayed to the selected relay station based on the reception response and the reception quality of data at the selected relay station selected by the selection means; and
a transmission means (202) for relaying data to the selected relay station in accordance with the redundancy of data set by the setting means.

3. The relay station according to claim 2,
wherein the reception means (203) includes an analysis means for analyzing the reception quality at the selected relay station based on the reception quality information, and
the setting means is configured to set priority so as to increase the redundancy of data within one frame for a relay station that has lower reception quality as a result of analysis by the analysis means.

4. The relay station according to claim 3,
wherein the reception means is configured to receive relay order information indicating a relay order of relay stations included in the data to be relayed, and
the setting means is configured to set the priority so as to further increase the redundancy of the data within the one frame when the relay station is the last relay station indicated by the relay order information.

5. The relay station according to claim 2,
wherein, when a first reception level corresponding to reception quality at the selected relay station with respect to the claimed relay station is smaller than a first threshold value, the setting means compares the first reception level to a second reception level corresponding to reception quality at the selected relay station with respect to a next relay station, and
when the second reception level is greater than the first reception level, and the difference between the second reception level and the first reception level is greater than a second threshold value, the setting means is configured to set the priority so as to decrease the redundancy of data in the one frame for the selected relay station.

6. The relay station according to claim 5, wherein, when the first reception level corresponding to reception quality at the selected relay station with respect to the claimed relay station is greater than the first threshold value, and the second reception level corresponding to reception quality at the selected relay station with respect to the next relay station is smaller than a predetermined third threshold value, the setting means is configured to set the priority so as to increase the redundancy of the data in the one frame.

7. The relay station according to claim 2,
wherein the setting means is configured to set the redundancy of the data based on a ratio of a number of slots for a relay station to a total number of slots in one frame.

8. The relay station according to claim 2,
wherein, when data received by the claimed relay station is not properly decoded, the setting means is configured to make a setting such that the claimed relay station does not retransmit the data, and another relay station that relays after the relay station is caused to relay the data.

9. A communication method for a relay station, **characterised by** comprising the following steps:
receiving, from each of a plurality of other relay stations (1 to 6), a reception response and reception quality information indicating reception quality of data at the other relay station with respect to data to be relayed, which data is originally transmitted from a control station (101) to the plurality of relay stations (1 to 6);
selecting a relay station to which the received data is to be relayed based on the reception response and the reception quality information received in the receiving step;
setting redundancy of data when data is to be relayed to the selected relay station based on the reception response and the reception quality of data at the selected relay station selected in the selecting step; and
transmitting by relaying data to the selected relay station in accordance with the redundancy of data set in the setting step.

10. A computer program that enables a computer to function as the relay station according to any one of claims 2 to 8.

11. A computer-readable storage medium storing a computer program for making a computer execute the communication method according to claim 9.

## Patentansprüche

1. Kommunikationssystem mit mehreren Kommunikationsstationen, die eine Steuerstation (101) und mehreren Relaisstationen (1 bis 6) zum Weiterleiten von Daten beinhalten, **dadurch gekennzeichnet, dass** jede Relaisstation (1 bis 6) umfasst:
eine Empfangseinrichtung (203), um von jeder der mehreren anderen Relaisstationen (1 bis 6) eine Empfangsantwort und eine Empfangsqualitätsinformation, die die Empfangsqualität von Daten an der anderen Relaisstation (1 bis 6) bezüglich der weiterzuleitenden Daten angibt, welche ursprünglich von der Steuerstation (101) zu den mehreren Relaisstationen (1 bis 6) gesendet wurden, zu empfangen;
eine Auswähleinrichtung (215) zum Auswählen einer Relaisstation (1 bis 6), zu der die empfangenen Daten weiterzuleiten sind, basierend auf der Empfangsantwort und der Empfangsqualitätsinformation, die von der Empfangseinrichtung empfangen wurden;
eine Einstelleinrichtung (217) zum Einstellen von Redundanz von Daten, wenn Daten zur ausgewählten Relaisstation weiterzuleiten sind, basierend auf der Empfangsantwort und der Empfangsqualität von Daten an der von der Auswähleinrichtung ausgewählten Relaisstation; und
eine Sendeeinrichtung (202) zum Weiterleiten von Daten zur ausgewählten Relaisstation nach Maßgabe der Redundanz von Daten, die durch die Einstelleinrichtung eingestellt wurde.

2. Relaisstation zum Weiterleiten von Daten, **gekennzeichnet durch**:
eine Empfangseinrichtung, um von jeder von mehreren anderen Relaisstationen (1 bis 6) eine Empfangsantwort und eine Empfangsqualitätsinformation, die die Empfangsqualität von Daten an der anderen Relaisstation (1 bis 6) bezüglich der weitergeleiteten Daten angibt, welche ursprünglich von einer Steuerstation (101) zu den mehreren Relaisstationen (1 bis 6) gesendet wurden, zu empfangen;
eine Auswähleinrichtung (215) zum Auswählen einer Relaisstation (1 bis 6), zu der die empfangenen Daten weiterzuleiten sind, basierend auf der Empfangsantwort und der Empfangsqualitätsinformation, die von der Empfangseinrichtung empfangen wurden;
eine Einstelleinrichtung (217) zum Einstellen von Redundanz von Daten, wenn Daten zur ausgewählten Relaisstation weiterzuleiten sind, basierend auf der Empfangsantwort und der Empfangsqualität von Daten an der von der Auswähleinrichtung ausgewählten Relaisstation; und
eine Sendeeinrichtung (202) zum Weiterleiten von Daten zur ausgewählten Relaisstation nach Maßgabe der Redundanz von Daten, die durch die Einstelleinrichtung eingestellt wurde.

3. Relaisstation nach Anspruch 2, wobei
die Empfangseinrichtung (203) eine Analyseeinrichtung zum Analysieren der Empfangsqualität an der ausgewählten Relaisstation basierend auf der Empfangsqualitätsinformation beinhaltet, und
die Einstelleinrichtung konfiguriert ist zum Einstellen einer Priorität derart, dass die Redundanz von Daten innerhalb eines Rahmens für eine Relaisstation, die als Ergebnis der Analyse durch die Analyseeinrichtung eine geringere Empfangsqualität aufweist, erhöht wird.

4. Relaisstation nach Anspruch 3, wobei
die Empfangseinrichtung konfiguriert ist zum Empfangen von Weiterleitungsreihenfolgeinformation, die eine Weiterleitungsreihenfolge von Relaisstationen angibt, in den weiterzuleitenden Daten, und
die Einstelleinrichtung konfiguriert ist zum Einstellen der Priorität derart, dass die Redundanz von Daten innerhalb des einen Rahmens weiter erhöht wird, wenn die Relaisstation die letzte durch die Weiterleitungsreihenfolgeinformation angegebene Relaisstation ist.

5. Relaisstation nach Anspruch 2, wobei,
wenn ein erster Empfangspegel entsprechend der Empfangsqualität an der ausgewählten Relaisstation bezüglich der beanspruchten Relaisstation kleiner als ein erster Schwellenwert ist, die Einstelleinrichtung den ersten Empfangspegel mit einem zweiten Empfangspegel vergleicht, der einer Empfangsqualität an der ausgewählten Relaisstation bezüglich einer nächsten Relaisstation entspricht, und
wenn der zweite Empfangspegel größer als der erste Empfangspegel ist, und die Differenz zwischen dem zweiten und dem ersten Empfangspegel größer als ein zweiter Schwellenwert ist, die Einstelleinrichtung konfiguriert ist, die Priorität derart einzustellen, dass die Redundanz von Daten in dem einen Rahmen für die ausgewählte Relaisstation verringert wird.

6. Relaisstation nach Anspruch 5, wobei, wenn der erste Empfangspegel entsprechend der Empfangsqualität an der ausgewählten Relaisstation bezüglich der beanspruchten Relaisstation größer ist als der erste Schwellenwert, und der zweite Empfangspegel entsprechend der Empfangsqualität an der ausgewählten Relaisstation bezüglich der nächsten Relaisstation kleiner ist als ein vorbestimmter dritter Schwellenwert, die Einstelleinrichtung konfiguriert ist zum Einstellen der Priorität derart, dass die Redundanz der Daten in dem einen Rahmen erhöht wird.

7. Relaisstation nach Anspruch 2, wobei die Einstelleinrichtung konfiguriert ist zum Einstellen der Redundanz der Daten basierend auf einem Verhältnis einer Anzahl von Zeitschlitzen für eine Relaisstation zu einer Gesamtanzahl von Zeitschlitzen in einem Rahmen.

8. Relaisstation nach Anspruch 2, wobei, wenn von der beanspruchten Relaisstation empfangene Daten nicht korrekt dekodiert sind, die Einstelleinrichtung konfiguriert ist, eine derartige Einstellung vorzunehmen, dass die beanspruchte Relaisstation die Daten nicht erneut weiterleitet, und eine andere Relaisstation, die nach der Relaisstation weiterleitet, zum Weiterleiten der Daten veranlasst wird.

9. Kommunikationsverfahren für eine Relaisstation, **gekennzeichnet durch** folgende Schritte:
Empfangen - von jeder von mehreren anderen Relaisstationen (1 bis 6) - einer Empfangsantwort und von Empfangsqualitätsinformation, die die Empfangsqualität von Daten an der anderen Relaisstation bezüglich der weitergeleiteten Daten angibt, welche ursprünglich von einer Steuerstation (101) zu den mehreren Relaisstationen (1 bis 6) gesendet wurden;
Auswählen einer Relaisstation, zu der die empfangenen Daten weiterzuleiten sind, basierend auf der Empfangsantwort und der Empfangsqualitätsinformation, die im Empfangsschritt empfangen wurden;
Einstellen von Redundanz von Daten, wenn Daten zur ausgewählten Relaisstation weiterzuleiten sind, basierend auf der Empfangsantwort und der Empfangsqualität von Daten an der im Auswählschritt ausgewählten Relaisstation; und
Senden **durch** Weiterleiten von Daten an die ausgewählte Relaisstation nach Maßgabe der Redundanz von Daten, die im Einstellschritt eingestellt wurde.

10. Computerprogramm, das einen Computer in die Lage versetzt, als die Relaisstation nach einem der Ansprüche 2 bis 8 zu fungieren.

11. Computerlesbares Speichermedium, das ein Computerprogramm speichert, welches einen Computer veranlasst, das Kommunikationsverfahren nach Anspruch 9 auszuführen.

## Revendications

1. Système de communication possédant une pluralité de stations de communication, la pluralité de stations de communication comprenant une station de commande (101) et une pluralité de stations relais (1 à 6) destinées à relayer des données, **caractérisé en ce que** chaque station relais (1 à 6) comprend :
un moyen de réception (203) destiné à recevoir, de chacune des autres stations parmi la pluralité de stations relais (1 à 6), une réponse de réception et des informations de qualité de réception qui indiquent la qualité de la réception des données par l'autre station relais (1 à 6), pour les données à relayer, lesdites données ayant été initialement émises par la station de commande (101) vers la pluralité de stations relais (1 à 6) ;
un moyen de sélection (215), destiné à sélectionner une station relais (1 à 6) vers laquelle les données reçues doivent être relayées, en fonction de la réponse de réception et des informations de qualité de réception reçues par le moyen de réception ;
un moyen de paramétrage (217), destiné à paramétrer la redondance des données lorsque des données doivent être relayées vers la station relais sélectionnée, en fonction de la réponse de réception et de la qualité de réception des données sur la station relais sélectionnée, qui a été sélectionnée par le moyen de sélection ; et
un moyen d'émission (202), destiné à relayer des données vers la station relais sélectionnée en fonction de la redondance des données paramétrée par le moyen de paramétrage.

2. Station relais destinée à relayer des données, **caractérisée en ce qu'**elle comprend :
un moyen de réception destiné à recevoir, de chacune des autres stations parmi la pluralité de stations relais (1 à 6), une réponse de réception et des informations de qualité de réception qui indiquent la qualité de la réception des données par l'autre station relais, pour les données à relayer, lesdites données ayant été initialement émises par la station de commande (101) vers la pluralité de stations relais (1 à 6) ;
un moyen de sélection (215), destiné à sélectionner une station relais (1 à 6) vers laquelle les données reçues doivent être relayées, en fonction de la réponse de réception et des informations de qualité de réception reçues par le moyen de réception ;
un moyen de paramétrage (217), destiné à paramétrer la redondance des données lorsque des données doivent être relayées vers la station relais sélectionnée, en fonction de la réponse de réception et de la qualité de réception des données sur la station relais sélectionnée, qui a été sélectionnée par le moyen de sélection ; et
un moyen d'émission (202), destiné à relayer des données vers la station relais sélectionnée en fonction de la redondance des données paramétrée par le moyen de paramétrage.

3. Station relais selon la revendication 2, dans laquelle :
le moyen de réception (203) comprend un moyen d'analyse destiné à analyser la qualité de réception sur la station relais sélectionnée, en fonction des informations de qualité de réception ; et
le moyen de paramétrage est configuré pour paramétrer la priorité de manière à augmenter la redondance des données dans une trame destinée à une station relais qui a une qualité de réception inférieure, en fonction du résultat de l'analyse par le moyen d'analyse.

4. Station relais selon la revendication 3, dans laquelle :
le moyen de réception est configuré pour recevoir des informations d'ordre de relayage indiquant un ordre de relayage de stations relais et incluses dans les données à relayer ; et
le moyen de paramétrage est configuré pour paramétrer la priorité de manière à augmenter encore la redondance des données dans la trame lorsque la station relais est la dernière station relais indiquée dans les informations d'ordre de relayage.

5. Station relais selon la revendication 2, dans laquelle :
lorsqu'un premier niveau de réception correspondant à la qualité de réception sur la station relais sélectionnée, par rapport à la station relais revendiquée, est inférieur à une première valeur de seuil, le moyen de paramétrage compare le premier niveau de réception à un second niveau de réception correspondant à la qualité de réception sur la station relais sélectionnée par rapport à une station relais suivante ; et
lorsque le second niveau de réception est supérieur au premier niveau de réception, et lorsque la différence entre le second niveau de réception et le premier niveau de réception est supérieure à une seconde valeur de seuil, le moyen de paramétrage est configuré pour paramétrer la priorité de manière à réduire la redondance des données dans la trame unique destinée à la station relais sélectionnée.

6. Station relais selon la revendication 5, dans laquelle, lorsque le premier niveau de réception correspondant à la qualité de réception sur la station relais sélectionnée, par rapport à la station relais revendiquée, est supérieur à la première valeur de seuil, et lorsque le second niveau de réception correspondant à la qualité de réception sur la station relais sélectionnée, par rapport à la station relais suivante, est inférieur à une troisième valeur de seuil prédéterminée, le moyen de paramétrage est configuré pour paramétrer la priorité de manière à augmenter la redondance des données dans la trame unique.

7. Station relais selon la revendication 2, dans laquelle le moyen de paramétrage est configuré pour paramétrer la redondance des données en fonction d'un rapport entre un nombre de créneaux temporels pour une station relais et un nombre total de créneaux temporels dans une trame.

8. Station relais selon la revendication 2, dans laquelle, lorsque des données reçues par la station relais revendiquée ne sont pas décodées correctement, le moyen de paramétrage est configuré pour réaliser un paramétrage tel que la station relais revendiquée ne retransmet pas les données et une autre station relais qui relaie après la station relais reçoit l'ordre de relayer les données.

9. Procédé de communication pour une station relais, **caractérisé en ce qu'**il comprend les étapes suivantes consistant à :
recevoir, de chacune des autres stations parmi la pluralité de stations relais (1 à 6), une réponse de réception et des informations de qualité de réception qui indiquent la qualité de la réception des données par l'autre station relais, pour les données à relayer, lesdites données ayant été initialement émises par la station de commande (101) vers la pluralité de stations relais (1 à 6) ;
sélectionner une station relais vers laquelle les données reçues doivent être relayées, en fonction de la réponse de réception et des informations de qualité de réception reçues dans l'étape de réception ;
paramétrer la redondance des données lorsque des données doivent être relayées vers la station relais sélectionnée, en fonction de la réponse de réception et de la qualité de réception des données sur la station relais sélectionnée, qui a été sélectionnée dans l'étape de sélection ; et
émettre en relayant des données vers la station relais sélectionnée en fonction de la redondance des données paramétrée dans l'étape de paramétrage.

10. Programme d'ordinateur permettant à un ordinateur de fonctionner comme station relais selon l'une quelconque des revendications 2 à 8.

11. Support de stockage lisible par ordinateur, portant un programme d'ordinateur destiné à commander à un ordinateur d'exécuter le procédé de communication selon la revendication 9.
